# EUROPEAN PATENT APPLICATION

(11) **EP 1 388 688 A2**
(43) Date of publication of application: **11.02.2004**
(21) Application number: 03014637.7
(22) Date of filing: 26.06.2003
(51) Int. Cl.: F16H 55/36, F16C 35/06, D03C 1/14

(54) **rotation transmitting device and textile machinery using it**

(30) Priority: 08.08.2002 JP 2002231317
(71) Applicant: TSUDAKOMA KOGYO KABUSHIKI KAISHA, Kanazawa-shi Ishikawa-Ken (JP)
(72) Inventor: Minamitani, Norio, Ishikawa-gun, Ishikawa-ken (JP)
(74) Representative: von Samson-Himmelstjerna, Friedrich R., Dipl.-Phys.

(57) **Abstract**

The rotation transmitting device comprises a pulley (20, 82) connected to a shaft (22) so as not to rotate relatively, and a supporter (24, 84) for supporting the pulley rotatably through a bearing (26). The bearing 26 is incorporated into the pulley such that the fitting position of the bearing becomes inside both end edges (42) of the outer periphery of the pulley in the direction of the rotation axis of the pulley.

## Description

### BACKGROUND OF THE INVENTION

### Field of the Invention

The present invention relates to a rotation transmitting device as well as textile machinery using it, and more particularly, to a device for transmitting the torque from a source of rotation as well as textile machinery using the device.

### Description of Prior Art

As one of rotation transmitting devices for transmitting the torque of a belt to a shaft through a pulley, there is known the art of Japanese Patent Appln. Public Disclosure (KOKAI) No. 58-220855. In this rotation transmitting device, a second pulley and a first clutch 4 acting as a shaft are combined by a key 2a so as not to relatively rotate, and the first clutch 4 or the shaft is rotatably combined with a supporter through a bearing.

In this prior art, the device has a wide boss portion at the center of the pulley so as to surely transmit the torque of the pulley 2 to the first clutch 4 or the shaft, and the first clutch 4 is supported by the supporter through the bearing , adjacent to the boss portion, fitted on the periphery. Therefore, a load due to the tension of the belt 22 to be bridged over the pulley 2 acts as a bending load on the first clutch 4 or the shaft.

In order to make the bending load small, it is necessary to shorten the distance in the direction of the rotation axis of the pulley between the position of the pulley 2 as an acting point of the belt tension and the position of the bearing having the first clutch 4 or the shaft supported on the supporter.

In the foregoing prior art, however, the pulley 2 and the bearing are combined with the first clutch 4 or the shaft such that the boss portion of the pulley 2 and the inner ring of the first clutch 4 are brought into contact with each other, so that the distance between the pulley 2 and the bearing in the direction of the rotation axis cannot be reduced to be or less than the distance mentioned above. Namely, the bearing should be attached more outward in the direction of the rotation axis from the boss portion of the pulley for the sake of the boss portion located at the center of the pulley.

As a result, in the above-mentioned prior art, the distance in the direction of the rotation axis between the positions for attachment of both the pulley 2 and the bearing to the first clutch 4 or the shaft becomes larger. Here, the first clutch 4 or the shaft comes to have a cantilever structure, making the bearing attaching position functioning as the supporter end and making the pulley attaching position functioning as the acting point of load generated by the belt 22 to be bridged over the pulley 2.

In such a cantilever structure, the bending moment caused to the first clutch 4 or the shaft due to the tension of the belt 22 bridged over the pulley 2 becomes great, whereby vibration, heat generation, wear and the like are caused to both bearing fitting portions of the first clutch 4 or the shaft on which the bearing is fitted, and to the bearing.

An object of the present invention lies in reducing the bending moment applied to the shaft by the belt bridged over the pulley.

### SUMMARY OF THE INVENTION

The rotation transmitting device according to the present invention comprises a pulley connected to a shaft so as not to rotate relatively, and a supporter for rotatably supporting the pulley through a bearing. The pulley has a pulley-side fitting portion for fitting either one of the outside and the inside of the bearing, and the supporter has a supporter-side fitting portion for fitting the other of the outside and the inside. The pulley-side fitting portion is extended farther than the position of the end edge of the outer periphery of the pulley from the central side of the pulley toward the end edge. The rotation is transmitted from either one of the belt and the shaft to the other of them through the pulley.

In the foregoing rotation transmitting device, an endless belt such as a timing belt, a flat belt, a V belt, etc., is bridged over the pulley. The position to fit the bearing into the pulley is the insides of both end edges of the pulley in the direction of the rotation axis. Therefore, the distance between the center position of the acting point of a load due to the tension of the endless belt and the center position of the bearing supporting position by the supporter becomes smaller, so that the bending moment to act on the shaft becomes smaller.

The outside of the bearing may be fitted into the pulley-side fitting portion, and the inner side of the bearing may be fitted on the supporter-side fitting portion. Thereby, the pulley-side fitting portion is away from the center of rotation of the pulley in the radial direction, and a bearing contact area of the pulley-side fitting portion becomes greater, so that the outside of the bearing can be firmly fitted. As a result, since the pulley-side fitting portion is less prone to be worn by the bearing, the frequency to exchange expensive pulleys can be decreased, and the running cost of the rotation transmitting device can be controlled.

The outside of the bearing is fitted into the supporter-side fitting portion, and the inside of the bearing may be fitted on the pulley-side fitting portion. Since this makes the inside of the bearing rotate, the force of rotation inertia becomes smaller, and as a result, the torque at the start of rotation of the loom, a preparatory machine or the like can be small, which raises the productivity.

The pulley-side fitting portion may be formed within an imaginary area surrounded by a first imaginary plane passing a one end edge of the outer periphery of the pulley in the direction of the rotation axis of the pulley and orthogonal to the rotation axis, and a second imaginary plane passing the other end edge of the outer periphery of the pulley and orthogonal to the rotation axis.

### BRIEF DESCRIPTION OF THE DRAWINGS

Fig. 1 is a front elevation showing an embodiment of a shedding device using the rotation transmitting device according to the present invention.
Figs. 2(A) and (B) is a partially enlarged view of the rotation transmitting device shown in Fig. 1, in which (A) is an enlarged view of the pulley in Fig. 1 as viewed from the left side in the direction of the rotation axis, and (B) is an enlarged section of Fig. 1.
Fig. 3 is an enlarged sectional view showing another embodiment of the rotation transmitting device according to the present invention.

### PREFERRED EMBODIMENT OF THE INVENTION

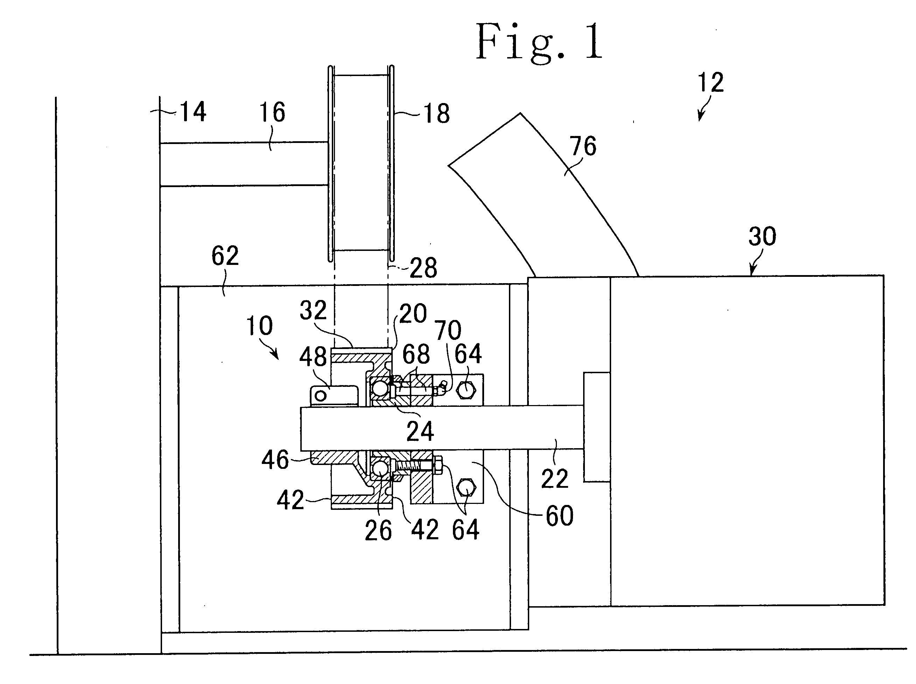

Referring to Fig. 1, a rotation transmitting device 10 is used for a shedding device 12 of a loom. The loom has a main shaft 16 extended from a frame 14. On the front end portion of the main shaft 16, a drive pulley 18 is fitted so as not to rotate relatively.

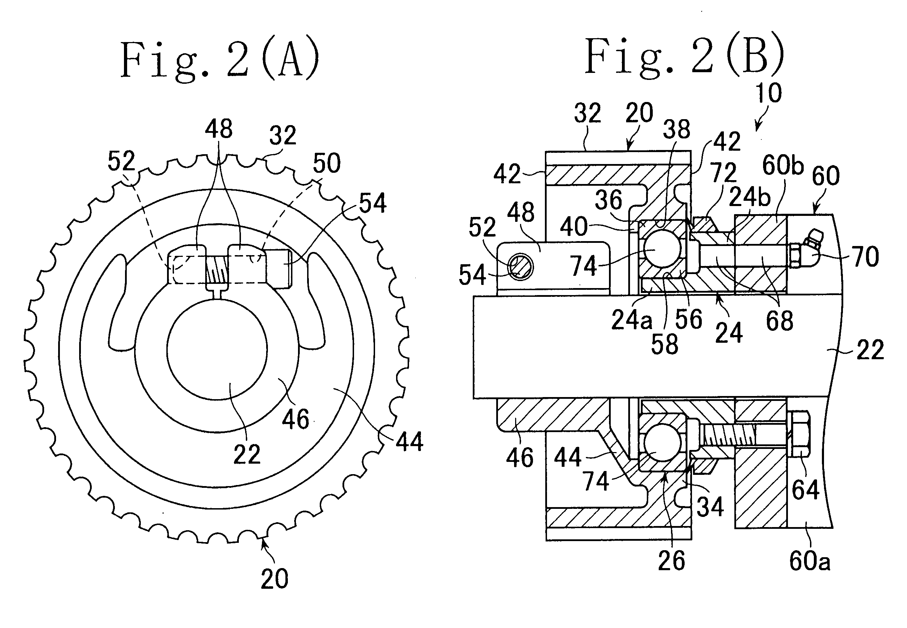

As shown in Figs. 1 and 2, the rotation transmitting device 10 comprises a timing pulley 20 for driving, a shaft 22 for driving a cam, a supporter 24 for supporting the pulley 20, a ball bearing 26 for rotatably supporting the pulley 20 on the supporter 24, and a timing belt 28 bridged over the peripheral portions of both pulleys 18, 20. The rotation transmitting device 10 transmits the rotation of the main shaft 16 to a cam drive portion 30 of the shedding device through such members as mentioned above.

As shown in Fig. 2, the pulley 20 has a plurality of teeth 32 meshing with the teeth of the timing belt 28 in the peripheral portion and a boss-like fitting portion 34 on the side of rotation center. The pulley 20 also has, in the boss-like fitting portion 34, a pulley-side fitting portion (housing portion) 38 with the outer ring (outer lace) of the bearing 26 fitted.

The boss-like fitting portion 34 has the pulley-side fitting portion 38 opened at one side so as to fit the bearing 26 on the pulley-side fitting portion 38 from one side (the right side in Fig. 2(B)) in the direction of the rotation axis of the pulley 20, and also has, on the other side, an inward flange 40 on which the outer ring 36 of the bearing 26 abuts so that the bearing 26 should not come out of the other side (the left side in Fig. 2(B)) in the direction of the rotation axis.

The pulley-side fitting portion 38 extends toward the rotation axis of the pulley 20 from the center side of the pulley 20 rather than from both peripheral end edges 42 of the pulley 20 in the direction of the rotation axis of the pulley 20. In this embodiment, the pulley-side fitting portion 38 is formed within a range more inward than both peripheral end edges 42 of the peripheral portion of the pulley 20 so that a bending moment may be reduced so as to work the least on the shaft 22.

A boss portion 46 of the pulley 20 to be attached to the shaft 22 has a semi-truncated conical rib 44 at the joint of the pulley-side fitting portion 38 and the inward flange 40 as well as a pair of slot portions (cutout portions) 48 extending radially outward. One of the slot portions 48 has a through hole 50, while the other of the slot portions 48 has a screw hole 52.

The shaft 22 is let into the boss portion 46. After the physical relationship between the shaft 22 and the pulley 20 in the circumferential direction is adjusted, the shaft 22 is held firmly on the boss portion 46 so as not to rotate relatively by tightening a clamping bolt 54 which extends through the through hole and is screwed into the screw hole 52.

The supporter 24 has an L-shaped section formed by the cylindrical portion 24a and the flange 24b integrally formed with one end of the cylindrical portion 24a, and also has in the cylindrical portion 24a a supporter-side fitting portion (bearing holder) 58 for fitting the inner ring (inner lace) 56 of the bearing 26.

The supporter 24 is attached to the frame 14 of the loom through a bracket 60 for the supporter 24 and a bracket 62 (see Fig. 1) for supporting the cam.

The bracket 60 has a cross-section so as to define L-shaped flanges 60a and 60b, and is attached to the bracket 62 in one flange 60a with a bolt 64. The supporter 24 is attached to the other flange 60b of the bracket 60 in the flange 24b with the bolt 64. The bracket 62 is attached to the frame 14.

There are holes 68, 68 for injecting a bearing lubricant such as grease respectively in the supporter 24 and the flanges 24b and 60b of the bracket 60. The lubricant is injected from an injection nipple 70 attached to the flange 60b of the bracket 60 and passes both injection holes 68, 68 to be injected between the outer ring 36 and the inner ring 56 of the bearing 26.

A ring 72 for sealing the lubricant is attached to the flange 24b. The ring 72 has wear resistance as well as resiliency and seals the gap between the flange 24b of the supporter 24 and the pulley 20 or the outer ring 36 so that the injected lubricant should not spatter.

The bearing 26 is a deep groove ball bearing to receive a radial load from the timing belt 28 bridged over the pulley 20, and displaces by a holder a ball 74 in the groove provided respectively in the outer ring 36 and the inner ring 56 so as to roll.

The rotation transmitting device 10 transmits the rotation of the main shaft 16 to the shaft 22 through the pulley 18, the timing belt 28 and the pulley 20. The rotation of the shaft 22 is transmitted, as shown in Fig. 1, to the cam drive portion 30 constituting a part of the shedding device 12. The cam drive portion 30 swings a cam lever 76 motion with the rotation of the shaft 22 following the main shaft 16, and makes a heald frame (not shown) perform shedding.

In the above-mentioned rotation transmitting device 10, the bearing 26 is to be positioned inward closer to the center side in the direction of the rotation axis than to both end edges 42 of the outer peripheral portion of the pulley 20, as the pulley-side fitting portion 38 is located more inward in the direction of the rotation axis than both end edges 42 of the outer peripheral portion of the pulley 20 and within a range surrounded by the outer peripheral portion of the pulley 20. As a result, the distance in the direction of the rotation axis from a position where the load from the timing belt 28 acts on the pulley 20 to the location of the bearing 26 in the shaft 22 becomes shorter, so that the bending moment acting on the shaft 22 becomes smaller.

Also, since the outer ring 36 and the inner ring 56 of the bearing 26 are respectively fitted on the pulley-side fitting portion 38 and the supporter-side fitting portion 58, the pulley-side fitting portion is departed from the center of rotation of the pulley 20 in the radial direction. By this, the area in contact with the bearing of the pulley-side fitting portion 38 becomes larger, so that the outer ring 36 of the bearing 26 can be firmly fitted. As a result, the pulley-side fitting portion 38 tends to wear less by the bearing 26, thereby decreasing the frequency of exchanging the expensive pulleys 20 and decreasing the running cost of the rotation transmitting device.

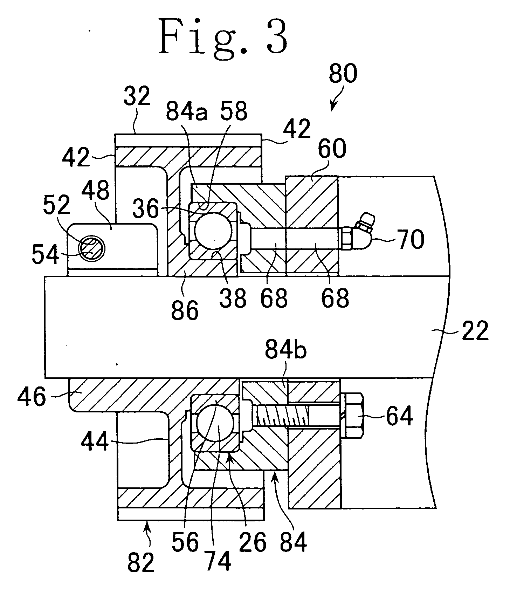

Referring to Fig. 3, a rotation transmitting device 80 has the inner ring 56 of the bearing 26 fit on the pulley-side fitting portion 38 of a pulley 82, and has the outer ring 36 of the bearing 26 fit on the supporter-side fitting portion 58 of a supporter 84. The pulley-side fitting portion 38 and the supporter-side fitting portion 58 are respectively outward face formed on the outer periphery of a boss-like fitting portion 86 of the pulley 82 and an inward face formed on the inner periphery of a cylindrical portion 84a of the supporter 84. The supporter 84 is attached by a flange 84b to the bracket 60 with a bolt 64.

In the rotation transmitting device 80, too, since the pulley fitting portion 38 is disposed inside both end edges 42 of the outer peripheral portion of the pulley 82, actions and effects like those of the rotation transmitting device 10 can be displayed.

Further, since the inner ring 56 of the bearing 26 rotates, the force of rotation inertia of the shaft 22 becomes small. Because of this, the torque of the main shaft 16 at the start of rotation can be small, so that a rise time of the rotational frequency of the main shaft 16 can be shortened, enabling a speedy shedding motion.

In the above embodiment, a deep groove ball bearing is used as the bearing 26. The present invention, however, is not limited to such a bearing, but any bearings having a load capacity against the radial load such as, for example, an angular contact ball bearing, a double row angular contact ball bearing, a self-aligning bearing, a cylindrical roller bearing and the like can be used.

Also, as the bearing 26, another bearing such as one having either an outer ring or an inner ring (the other of which is hardened and polished and brought into direct contact with a rolling element such as a roller and the rolling element constitutes either the inside or the outside of the bearing) or a bush bearing-shaped one such as oil impregnated sintered metal may be used. Instead of using one bearing 26, it is possible to use a plurality of bearings.

Likewise, for the pulleys 20, 82, it is possible to use a flat pulley, a V pulley and the like may be used besides the timing pulley. In such a case, in place of the timing belt 28, another endless belt such as a flat belt, a V belt or the like is used.

The rotation transmitting device 10, 80 may be used in textile machinery such as, for example, a sizer, a warper, etc., other than a loom. Also, the present invention can be applied not only to a device for transmitting torque from an endless belt to a shaft through a pulley but also to a device for transmitting torque from a shaft to an endless belt through a pulley.

The present invention, therefore, is not limited to the foregoing embodiments but can be variously modified without departing from its purport.

## Claims

1. A rotation transmitting device for transmitting the torque from either one of a belt and a shaft to the other through a pulley, comprising: a pulley (20, 82) connected to a shaft (22) so as not to rotate relatively; and a supporter (24, 84) for supporting said pulley rotatably through a bearing (26),
wherein said pulley (20, 82) has a pulley-side fitting portion (38) for fitting either one of the outside and the inside of said bearing,
wherein said supporter (24, 84) has a supporter-side fitting portion (58) for fitting the other of said outside and inside, and
wherein said pulley-side fitting portion (38) extends in the direction of the rotation axis of said pulley from the center side of said pulley farther than the position of the end edge of the outer periphery of said pulley toward said end edge.

2. A rotation transmitting device according to claim 1, wherein the outside of said bearing (26) is fitted on said pulley-side fitting portion (38) and the inside of said bearing (26) is fitted on said supporter-side fitting portion (58).

3. A rotation transmitting device according to claim 1, wherein the outside of said bearing (26) is fitted into said supporter-side fitting portion (58) and the inside of said bearing (26) is fitted into said pulley-side fitting portion (38).

4. A rotation transmitting device according to claim 1, 2 or 3, wherein said pulley-side fitting portion (38) is formed within an imaginary range surrounded by a first imaginary plane passing one end edge of the outer periphery of said pulley (20, 82) in the direction of said rotation axis and orthogonal to said rotation axis and a second imaginary plane passing the other end edge of the outer periphery of said pulley in the direction of said rotation axis and orthogonal to said rotation axis.

5. Textile machinery using the rotation transmitting device described in any one of claims 1 through 4.
